# EUROPÄISCHE PATENTSCHRIFT

(11) **EP 1 399 351 B1**
(45) Veröffentlichungstag und Bekanntmachung des Hinweises auf die Patenterteilung: **06.04.2005**
(21) Anmeldenummer: 02714127.4
(22) Anmeldetag: 29.01.2002
(51) Int. Cl.: B62D 25/00

(54) **KAROSSERIE EINES KRAFTFAHRZEUGS**
AUTOMOTIVE BODY
CARROSSERIE DE VEHICULE AUTOMOBILE

(30) Priorität: 06.02.2001 DE 10105280
(43) Veröffentlichungstag der Anmeldung: 24.03.2004
(73) Patentinhaber: Dr.Ing. h.c.F. Porsche Aktiengesellschaft, 70435 Stuttgart (DE)
(72) Erfinder: PODEWSKI, Lutz, 75417 Mühlacker (DE); HABERMALZ, Ulf, 38118 Braunschweig (DE); SEWERIN, Werner, 33330 Gütersloh (DE)
(86) Internationale Anmeldenummer: PCT/EP2002/000874
(87) Internationale Veröffentlichungsnummer: WO 2002/062648

(56) Entgegenhaltungen:
- WO-A-98/36944
- US-A- 5 678 826
- PATENT ABSTRACTS OF JAPAN vol. 1996, no. 11, 29. November 1996 (1996-11-29) -& JP 08 188176 A (SUZUKI MOTOR CORP), 23. Juli 1996 (1996-07-23)

## Beschreibung

Die Erfindung bezieht sich auf eine Karosserie eines Kraftfahrzeugs, gemäß Oberbegriff des Anspruchs 1 und wie in der DE 691 02 009 T2 offenbart wird.

Im Kraftfahrzeugbau ist es bekannt, Hohlräume von Karosserieelementen, insbesondere Säulen- und Trägerquerschnitte, zu verschließen. So wird der Übergangsbereich von zwei Karosserieelementen, beispielsweise ein Verbindungsknoten zwischen einem Türschweller und einer Säule, verschlossen. Zwischen Schweller und Säule liegt ein Verschlusselement, das den Hohlraum in zwei Teilhohlräume trennt. Zwei andere Teilhohlräume können beispielsweise durch den Schweller und den sich daran anschließenden Radlauf gebildet sein. Das zwischen den Teilhohlräumen liegende Verschlusselement dient insbesondere zum Abdichten von Nass- und Trockenbereichen, um zu verhindern, dass in den Trägern bzw. Säulen vorhandene Feuchtigkeit in den Innenraum des Fahrzeugs gelangt. Außerdem vermindern diese Verschlusselemente die Übertragung von Luftschall innerhalb der Träger- und Säulenstruktur.

Um in den Hohlraum ein Korrosionsschutzfluid, insbesondere Flüssigwachs, einzubringen, ist der DE 691 02 009 T2 zu entnehmen, eine Öffnung zu dem Hohlraum vorzusehen, durch die das Flüssigwachs warm eingebracht werden kann. Nach dem Abkühlen bzw. dem Erstarren bildet dieses Flüssigwachs somit eine Korrosionsschutzschicht an den Innenwänden der Hohlräume. Diese Öffnung zu dem Hohlraum wird anschließend mit einem Stopfen verschlossen.

Aufgabe der Erfindung ist es, eine Karosserie eines Kraftfahrzeugs zu schaffen, bei der ein Hohlraumschutz auch in den Teilhohlräumen erzielt wird, die durch ein Verschlusselement voneinander getrennt sind.

Gelöst wird diese Aufgabe mit einer Karosserie eines Kraftfahrzeugs, die die in Anspruch 1 genannten Merkmale aufweist. Weitere, die Erfindung ausgestaltende Merkmale sind in den Unteransprüchen angegeben.

Die mit der Erfindung hauptsächlich erzielten Vorteile sind darin zu sehen, dass sich im Betrieb des Fahrzeugs Luftschall nicht von einem Teilhohlraum zu einem anderen Teilhohlraum ausbreiten kann, da das erstarrte Hohlraumschutzfluid eine Barriere in der Luftschallstrecke bildet. Besonders vorteilhaft ist es, dass durch den Siphon das flüssige Hohlraumschutzfluid für den Hohlraumschutz in jeden der Teilhohlräume eingebracht werden kann. Außerdem wird eine Flüssigkeitsabdichtung zu den Teilhohlräumen erzielt.

Der Siphon kann besonders einfach und kostengünstig nach den in den Ansprüchen 2 und 3 angegebenen Ausführungsvarianten bereitgestellt werden. Alternativ könnte in das Karosserieelement auch ein Einsatz als Verschlusselement eingebracht werden, der einen durchgehenden Kanal aufweist, der zumindest abschnittsweise gebogen verläuft und so einen Siphonbogen bildet.

Im folgenden wird die Erfindung anhand von Ausführungsbeispielen mit Bezug auf die Zeichnung näher erläutert.

Es zeigen
- Fig. 1: ausschnittweise eine Karosserie im Übergangsbereich zwischen Radlauf und Türschweller in Schnittdarstellung,
- Fig. 2: das Befüllen der Hohlräume mit Flüssigwachs,
- Fig. 3: den zwischen zwei Teilhohlräumen liegenden, durch erstarrtes Wachs verschlossenen Siphon nach einem ersten Ausführungsbeispiel,
- Fig. 4: eine Schnittdarstellung entlang der Linie IV-IV in Fig. 1 und
- Fig. 5: einen in einem Karosserieelement eingesetzten Siphon nach einem zweiten Ausführungsbeispiel.

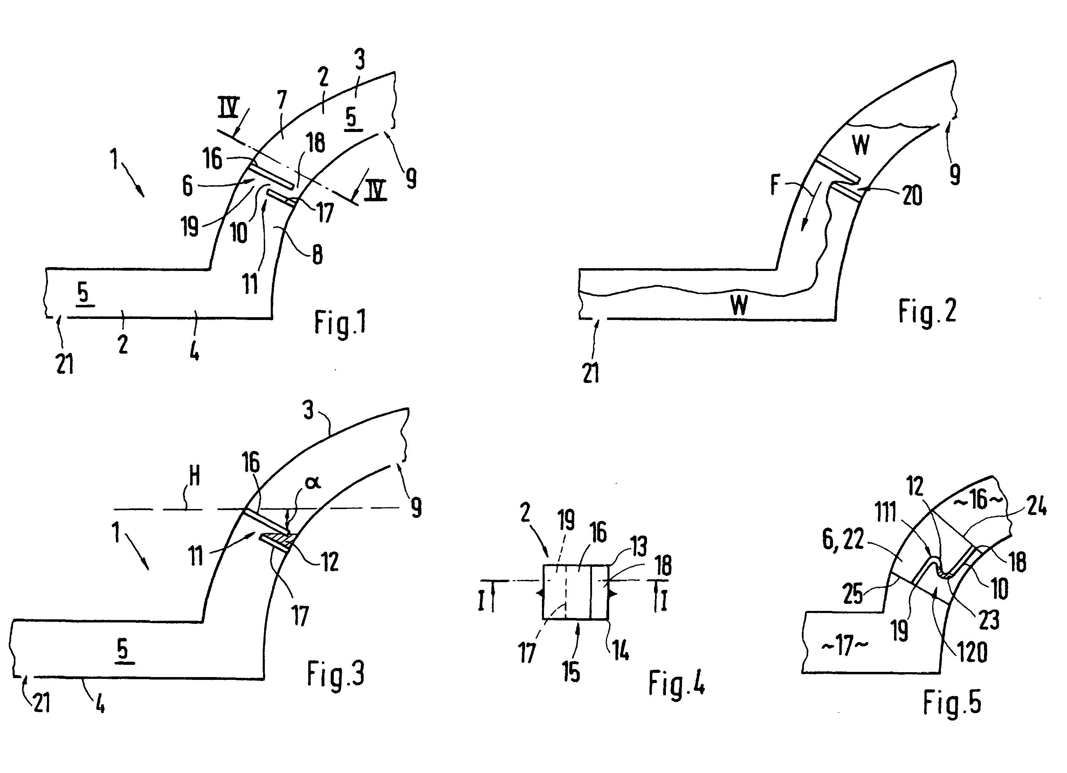

Die in Fig. 1 lediglich ausschnittweise dargestellte Karosserie 1 umfasst mehrere Karosserieelemente 2, die rein beispielhaft durch einen Radlauf 3 und einen Seiten- bzw. Türschweller 4 dargestellt sind. Weitere, hier nicht wiedergegebene Karosserieelemente können beispielsweise der Dachrahmen, sich zwischen dem Dachrahmen und dem Türschweller erstreckende Säulen, sich zwischen den Türschwellern erstreckende Querträger oder andere Säulen und Träger sowie ein Frontscheibenwindlauf sein.

Die Karosserie 1 beziehungsweise zumindest eines der Karosserieelemente 2 besitzt einen Hohlraum 5, der durch ein auch als Abschottung bezeichnetes Verschlusselement 6 in zwei Teilhohlräume 7 und 8 unterteilt ist. Selbstverständlich kann das Verschlusselement 6 auch zwischen zwei Hohlräumen 5 von zwei aneinander angrenzenden Karosserieelementen 2 liegen und so den Querschnitt zumindest eines der Karosserieelemente 2 verschließen. Wenigstens einer der Hohlräume 5 weist eine Einlassöffnung 9 auf, durch die ein Hohlraumschutzfluid W, beispielsweise Konservierungsmittel, insbesondere Flüssigwachs, in den Hohlraum 5 einbringbar ist. Das Flüssigwachs W ist wenigstens beim Einbringen in die Hohlräume 5, 7 und 8 flüssig, so dass es durch die Schwerkraft in den Hohlräumen 5 bzw. Teilhohlräumen 7 und 8 nach unten fließt, wie dies aus Fig. 2 ersichtlich ist. Damit das Flüssigwachs W von dem Teilhohlraum 7 in den Teilhohlraum 8 und in den Hohlraum 5 des Türschwellers 4 übertreten kann, ist in dem Verschlusselement 6 ein Durchlass 10 ausgebildet, der als Siphon 11 realisiert ist, durch den - gemäß Fig. 2 - das Flüssigwachs W fließen kann. Der Siphon 11 wird jedoch nicht vollständig entleert, vielmehr verbleibt ein Rest des Flüssigwachses W im Siphon 11. Beim Erstarren, beispielsweise durch Abkühlung, des Flüssigwachses W bildet dieses in dem Siphon 11 einen Wachs-Verschlussstopfen 12 (Fig. 3), der eine Barriere für Schallflüsse darstellt, die sich innerhalb der hohlen Karosserieelemente 2 ausbreiten. Somit wird mit dem Siphon 11 erreicht, dass durch Verschlusselemente abgeschlossene Bereiche der Karosserie 1 mit Wachs konserviert werden können und dennoch die akustischen Anforderungen nach einer vollständig dichten Abschottung erfüllt werden.

Wie aus Fig. 4 hervorgeht, wird ein Karosserieelement 2 vorzugsweise durch zwei Zuschnitte 13 und 14 gebildet, die vorzugsweise als Blechzuschnitte ausgebildet sind und durch entsprechende Blechumformung in eine schalenartige Form gebracht werden. Die beiden Zuschnitte 13 und 14 werden an ihren Randbereichen miteinander, beispielsweise durch Schweißen, verbunden und so zu einer Platine 15 zusammen gesetzt, die dann das Karosserieelement 2 bildet. Der Querschnitt der Platine 15 und damit der des Hohlraumes 5 ist viereckig ausgestaltet; er kann natürlich beliebig kreisförmig oder eckig sein. Innerhalb der Platine 15 wird der Siphon 11 im gezeigten Ausführungsbeispiel durch zwei in Fließrichtung F des Flüssigwachses W beabstandet zueinander liegende Trennelemente 16 und 17 gebildet, wobei jeweils ein Trennelement 16 bzw. 17 eine Durchlassöffnung 18 bzw. 19 aufweist. Jedes Trennelement 16 und 17 kann sich über den gesamten Querschnitt des Hohlraums 5 erstrecken und als Durchlassöffnung einen Durchbruch aufweisen. Die beiden Durchlässe 18 und 19 sind dann - quer zur Flussrichtung F des Flüssigwachses W gesehen - versetzt zueinander angeordnet. Dadurch kann auf einfache Art und Weise der Siphon 11 realisiert werden, wenn die Trennelemente so angeordnet sind, dass ein Siphonbogen 20 vorliegt, in dem eine Wachsrestmenge verbleibt. Vorzugsweise werden die Trennelemente 16 und 17 so ausgerichtet, dass sie einen Winkel α mit der Horizontalen H einschließen.

Bevorzugt wird ein Ausführungsbeispiel, bei dem die beiden Trennelemente 16 und 17 sich lediglich teilweise über den Querschnitt des Hohlraumes 5 erstrecken, wie dies in den Figuren 1 bis 4 zu sehen ist. Die erste Durchlassöffnung 18 liegt somit zwischen dem freien Ende des ersten Trennelements 16 und der Innenwandung der Platine 15 vor. Die zweite Durchlassöffnung 19 liegt mithin zwischen dem freien Ende des zweiten Trennelements 17 und der Innenwandung der Platine 15, so dass auch bei dieser Ausgestaltung des Verschlusselements 6 die Durchlassöffnungen versetzt zueinander angeordnet sind.

Vor dem Zusammensetzen der beiden Zuschnitte 13 und 14 wird vorzugsweise in jeden Zuschnitt eines der Trennelemente 16 oder 17 eingesetzt und mit dem Zuschnitt 13 bzw. 14, vorzugsweise fest, verbunden. Beim Zusammensetzen der Zuschnitte 13 und 14 zur Platine 15 wird dann der Siphon 11 gebildet. Selbstverständlich ist es auch möglich, sowohl das erste als auch das zweite Trennelement 16 und 17 in einen der Zuschnitte 13 oder 14 einzusetzen und mit diesem fest zu verbinden und anschließend die Zuschnitte zusammenzufügen.

Mit dem den Siphon 11 aufweisenden Verschlusselement 6 ist es somit möglich, Flüssigwachs in sonst nicht konservierbare Bereiche der Karosserie 1 derart einzubringen, dass beim Wachsfluten über die Einlassöffnung 9 das Flüssigwachs W - in Fließrichtung F gesehen - in nachgeordnete Hohlräume eintritt, jedoch anschließend, d.h. nach dem Erstarren des Wachses, den Siphon 11 durch den als Verschlussstopfen 12 verbleibenden Wachsrest verschließt. In zumindest einem der Karosserieelemente 2 kann eine Auslassöffnung 21 vorgesehen sein, aus der zuviel eingebrachtes Wachs W abfließen kann. Sowohl die Ein- als auch die Auslassöffnung 9 und 21 können mit einem Verschlussmittel (nicht dargestellt) verschlossen werden.

Nach Fig. 5 ist für ein zweites Ausführungsbeispiel eines Siphons 111 in dem Hohlraum 5 vorgesehen, diesen Siphon 111 in einem das Verschlusselement 6 bildenden Einsatzteil 22 auszugestalten. In dem Einsatzteil ist ein durchgehendes, die Teilhohlräume 16 und 17 verbindendes Rohr 23 eingebracht, das somit an jedem Ende 24 bzw. 25 des Einsatzteils die Durchlassöffnung 18 bzw. 19 aufweist. Diese Enden können durch die Trennelemente 16, 17 gebildet sein, zwischen denen das Rohr 23 liegt, das abschnittsweise gebogen ausgeführt ist und so einen Siphonbogen 120 bildet, in dem der Verschlussstopfen 12 angeordnet ist.

## Patentansprüche

1. Karosserie (1) eines Kraftfahrzeugs, mit wenigstens einem zumindest einen Hohlraum (5) aufweisenden Karosserieelement (2), einer Einlassöffnung (9) zum Einbringen eines Hohlraumschutzfluids (W) in den Hohlraum (5) und mit einem Verschlusselement (6) in dem Hohlraum (5), welches den Hohlraum in zwei Teilhohlräume (7,8) teilt, **dadurch gekennzeichnet, dass** das Verschlusselement (6) einen Durchlass (10) für das erstarrende Hohlraumschutzfluid (W), insbesondere Flüssigwachs, aufweist und dass der Durchlass (10) als Siphon (11, 111) ausgebildet ist.

2. Karosserie nach Anspruch 1, **dadurch gekennzeichnet, dass** das Karosserieelement (2) zwei Zuschnitte (13, 14) aufweist, die miteinander zu einer Platine (15) verbunden sind, und dass der Siphon (11, 111) durch zwei in Fließrichtung (F) des Wachses beabstandet zueinander liegende Trennelemente (16, 17) mit jeweils einer Durchlassöffnung (18, 19) gebildet wird, wobei die so gebildeten ersten und zweiten Durchlassöffnungen (18, 19) versetzt zueinander angeordnet sind.

3. Karosserie nach Anspruch 2, **dadurch gekennzeichnet, dass** sich die beiden Trennelemente (16, 17) teilweise in dem Querschnitt des Hohlraumes (5) erstrecken, wobei die erste Durchlassöffnung (18) zwischen dem freien Ende des einen Trennelements (16) und einem der Zuschnitte (13) und die zweite Durchlassöffnung (19) zwischen dem freien Ende des anderen Trennelementes (17) und dem anderen Zuschnitt (13) liegt.

4. Karosserie nach einem der Ansprüche 1 und 2, **dadurch gekennzeichnet, dass** der Siphon (111) durch ein einen Siphonbogen (120) aufweisendes Rohr (23) gebildet ist.

5. Karosserie nach einem der Ansprüche 2, 3 und 4, **dadurch gekennzeichnet, dass** die Trennelemente (6a, 6b) einen Säulen- und/oder Trägerquerschnitt des Kraftfahrzeugs abschließen.

## Claims

1. A body (1) of a motor vehicle, comprising at least one body element (2) having at least one cavity (5), an inlet opening (9) for introducing a cavity protection fluid (W) into the cavity (5), and a closing element (6) arranged in the cavity (5) and dividing said cavity into two sub-cavities (7, 8), **characterised in that** the closing element (6) has a passage (10) for the solidifying cavity protection fluid (W), especially liquid wax, and **in that** the passage (10) is formed as a siphon (11, 111).

2. A body according to claim 1, **characterised in that** the body element (2) comprises two blanks (13, 14) which are connected to one another to form a bar (15), and **in that** the siphon (11, 111) is formed by two separating elements (16, 17) lying spaced apart in the flow direction (F) of the wax and each having a passage opening (18, 19), wherein the first and second passage openings (18, 19) thus formed are arranged so as to be mutually offset.

3. A body according to claim 2, **characterised in that** the two separating elements (16, 17) extend within part of the cross-section of the cavity (5), the first passage opening (18) lying between the free end of the one separating element (16) and one of the blanks (13), and the second passage opening (19) lying between the free end of the other separating element (17) and the other blank (13 [*sic -* 14]).

4. A body according to either one of claims 1 and 2, **characterised in that** the siphon (111) is formed by a pipe (23) having a siphon bend (120).

5. A body according to any one of claims 2, 3 and 4, **characterised in that** the separating elements (6a, 6b) close off a pillar cross-section and/or beam cross-section of the motor vehicle.

## Revendications

1. Carrosserie (1) d'un véhicule automobile comportant au moins un élément de carrosserie (2) présentant au moins une cavité (5), une ouverture d'entrée (9) pour introduire un fluide de protection de cavité (W) dans la cavité (5) et comportant un élément de fermeture (6) dans la cavité (5) qui divise la cavité en deux parties de cavité (7, 8), **caractérisée en ce que** l'élément de fermeture (6) comporte un passage (10) pour le fluide de protection de cavité (W) se solidifiant, en particulier de la cire liquide, et **en ce que** le passage (10) est réalisé comme siphon (11, 111).

2. Carrosserie selon la revendication 1, **caractérisée en ce que** l'élément de carrosserie (2) comporte deux flans (13, 14) qui sont reliés entre eux en une platine (15), et **en ce que** le siphon (11, 111) est formé par deux éléments de séparation (16, 17), espacés l'un de l'autre dans la direction d'écoulement (F) de la cire, avec chacun une ouverture de passage (18, 19), les première et deuxième ouvertures de passage (18, 19) ainsi formées étant disposées décalées les unes par rapport aux autres.

3. Carrosserie selon la revendication 2, **caractérisée en ce que** les deux éléments de séparation (16, 17) s'étendent en partie dans la section transversale de la cavité (5), la première ouverture de passage (18) se situant entre l'extrémité libre d'un élément de séparation (16) et l'un des flans (13), et la deuxième ouverture de passage (19) se situant entre l'extrémité libre de l'autre élément de séparation (17) et l'autre flan (13).

4. Carrosserie selon l'une des revendications 1 et 2, **caractérisée en ce que** le siphon (111) est formé dans un tube (23) présentant un coude de siphon (120).

5. Carrosserie selon l'une des revendications 2, 3 et 4, **caractérisée en ce que** les éléments de séparation (6a, 6b) ferment une section transversale de montant et/ou de poutre du véhicule automobile.
